(19) Europäisches Patentamt

European Patent Office

Office européen des brevets

(11) **EP 0 785 123 B1**

(12) **EUROPÄISCHE PATENTSCHRIFT**

(45) Veröffentlichungstag und Bekanntmachung des Hinweises auf die Patenterteilung:
**25.04.2001   Patentblatt 2001/17**

(51) Int Cl.⁷: **B61F 5/38**, B61F 5/44, B61F 3/12

(21) Anmeldenummer: **97100400.7**

(22) Anmeldetag: **11.01.1997**

(54) **Verfahren zur Spurführung von Fahrzeugen**

Tracking method for vehicles

Procédé de guidage de voie pour véhicules

(84) Benannte Vertragsstaaten:
**AT BE CH DE ES FI FR GB IT LI NL**

(30) Priorität: **16.01.1996   DE 19601301**

(43) Veröffentlichungstag der Anmeldung:
**23.07.1997   Patentblatt 1997/30**

(73) Patentinhaber: **ALSTOM LHB GmbH
38239 Salzgitter (DE)**

(72) Erfinder: **Frederich, Fritz, Dr.-Ing.
47809 Krefeld (DE)**

(56) Entgegenhaltungen:
**EP-A- 0 374 290          EP-A- 0 692 421
DE-A- 2 060 231          DE-A- 4 109 356
FR-A- 2 622 164**

**Beschreibung**

Die Erfindung betrifft zwei Verfahren zur sicheren, verschleißarmen und komfortablen Führung von Fahrzeugen, insbesondere Schienenfahrzeugen im Spurkanal eines Gleises. Die vorgesehenen Verfahren dienen dazu, unerwünschte, störende Bewegungen der Räder eines Fahrwerks auf den Schienen durch geeignete Maßnahme auszuschalten. Störungsfrei auf den Schienen abrollende Räder sind leise. Außerdem reduziert sich der Verschleiß an Rädern und Schienen. Gegenstand der Erfindung sind zwei prinzipiell unterschiedliche Methoden, mit denen die gewünschten Ziele erreicht werden können.

Fahrwerke von Schienenfahrzeugen sind mit Radsätzen oder Radpaaren ausgerüstet.

Bei Radsätzen sind zwei Räder fest auf einer Radsatzwelle nebeneinander angeordnet. Beide Räder rotieren mit derselben Drehzahl; die Aufteilung von Antriebs- und Bremsmomenten auf die Räder eines Radsatzes richtet sich nach dem jeweiligen kinematischen Zustand der Berührungspunkte von Rädern und Schienen.

Die Räder von Radsätzen werden mit profilierten Fahrflächen versehen. Dadurch wird erreicht, daß die Berührungsflächen von Rädern und Schienen geneigt sind. An den geneigten Berührungsflächen entstehen unmittelbar aus der Radlast zur Gleisachse weisende Rückstellkräfte, die den rollenden Radsatz bei geeigneter Ausbildung des Profils der Fahrflächen zur Gleismitte zentrieren und ihn dem Verlauf der Gleisachse ohne äußere Hilfe folgen lassen.

An profilierten Fahrflächen ändern sich die wirksamen Radhalbmesser, wenn die Berührungspunkte auf den Fahrflächen der Räder wandern. Damit ändern sich die augenblicklichen Umfangsgeschwindigkeiten, was zu Antriebs- und Bremskräften an den Rädern führt. Die Antriebskraft eines Rades bildet mit der Bremskraft des anderen ein Kräftepaar, welches den Radsatz um seine Halbachse wendet. Die kinematischen Verhältnisse, die Kräfte an den Radumfängen und die Stellung des Radsatzes im Spurkanal des Gleises verändern sich ständig. Eine dauernd ungeordnet wechselnde Querverschiebung und Schrägstellung des Radsatzes im Gleis ist die Folge. Dieser Effekt ist als Radsatz-Wellenlauf bekannt. Gegen den Radsatz-Wellenlauf werden Radsatzführungen eingesetzt, welche die Wendebewegung von Radsätzen ganz oder teilweise unterdrücken. Mit Radsatzführungen können die sicht- und spürbaren Bewegungen des Radsatz-Wellenlaufs nur unterdrückt, nicht aber die Ursachen für den Wellenlauf - nämlich die in den Fahrflächen entstehenden Kräfte - beseitigt werden.

Radpaare kennen keinen Wellenlauf. Die Räder von Radpaaren sind ebenso wie die von Radsätzen parallel nebeneinander angeordnet; sie können aber unabhängig voneinander rotieren. Damit bleibt der Vorteil profilierter Räder erhalten: Radpaare zentrieren sich direkt durch die Profilseitenkräfte zur Gleismitte. Weil die Räder voneinander unabhängig rotieren können, fehlt dem Radpaar allerdings jede Wendefähigkeit. Radpaare können von selbst keine Wendewinkel erzeugen. Sie bedürfen äußerer Kräfte und Momente, zum Einstellen von Wendebewegungen wie sie z. B. zur zwangsfreien Fahrt im Gleisbogen erforderlich sind. Deshalb werden Radpaare durch ein anderes Radpaar oder eine externe Einrichtung gesteuert. Letztere bedingt immer, daß Kräfte bzw. Kräftepaare vom Fahrzeug auf das Radpaar einwirken müssen.

Der Wellenlauf von Radsätzen ist für die Spurführung ebenso unerwünscht wie die Unfähigkeit von Radpaaren, sich selbsttätig im Gleisbogen einzustellen. In beiden Fällen entstehen zusätzliche zu den Hauptbewegungen Fahrgeschwindigkeit und Rotation der Räder unerwünschte Nebenbewegungen der Räder relativ zu den Schienen. Quer- und Längsschlupf in den Rad/Schiene-Kontakten von Radsätzen und Radpaaren verursachen Kraftschlußkräfte, die zusammen mit den Relativgeschwindigkeiten zwischen Rädern und Schienen zu Kraftschluß-Verlustleistungen führen.

Letztere sind die Ursache von Radverschleiß, Schienenverschleiß und Rollgeräuschen im Rad/Schiene-Kontakt.

Aus der EP-A-0 692 421 (Veröffentlichungstag: 17.01.1996) ist ein Verfahren zur Lenkung von Laufwerken und ein nach diesem Verfahren gelenkter, gekoppelter Fahrwerksverband bekannt, bei dem über Laufwerke mit in Spurkanal einstellbaren Rädern, deren Hauptebene einen veränderlichen Winkel zu einer Richtung bildet, die parallel zur Lächsachse der auf Schienen rollenden Einheiten bzw. Fahrwerken verläuft, wobei das Verfahren bzw. der Fahrwerksverband zumindest eine Einstellvorrichtung aufweist, die geeignet ist, den benannten, veränderlichen Winkel für die Räder in Abhängigkeit von der Krümmung der Schienen und in Abhängigkeit vom relativen Winkel (Knickwinkel) zwischen zwei rollenden Einheiten so einzustellen, dass die Hauptebene der Räder im wesentlichen mit der Tangente zu den Schienen zusammenfällt.

Um dies zu bewirken, werden Messungen zum Erhalt von Werten für den relativen Winkel (Knickwinkel) ausgeführt und die Meßwerte an eine Rechnereinheit weitergeleitet. Weiterhin führt man der Rechnereinheit den Verlauf der Schienen in Form eines mathematischen Ausdrucks zu und berechnet mit Hilfe einer mathematischen Funktion, die den relativen Winkel (Knickwinkel) zwischen zwei Einheiten berücksichtigt, Werte für den veränderlichen Winkel für ein zugeordnetes Laufwerk, um die Räder bzw. das Laufwerk bestimmungsgemäß tangential zu den Schienen auszurichten.

Aus der EP-A-0 374 290 ist ein Schienenfahrzeug bekannt, welches beidseitig entlang der Fahrzeuglängsachse eine vorgebbare Zahl von Einzelrädern umfaßt, die durch Lenkung schwenkbar sind. Eine spurfehlerfreie Lenkung jedes Einzelrades in Kurvenbereiche soll dadurch erreicht werden, daß eine Schienenverlauf-Meßeinrichtung vorgesehen ist, die die Abweichung einer Fahrzeugachse vom Verlauf der Schienen mißt und die abhängig von der gemessenen Abweichung ein Lenksignal für jedes Einzelrad unabhängig vom jeweils anderen erzeugt. Als Schienenverlauf-Meßeinrichtung sind berührungslos arbeitende Systeme auf opto-elektronischer oder magnetischer bzw. elektromagnetischer Basis vorgeschlagen.

Der Erfindung liegt die Aufgabe zugrunde, durch geeignete Maßnahmen die Einstellung von Radpaaren in Gleisbögen zu bewerkstelligen und den Wellenlauf von Radsätzen zu eliminieren, ohne die positiven Eigenschaften von Radpaaren (kein Wellenlauf) und Radsätzen (Wendefähigkeit) zu beeinträchtigen.

Die Aufgabe wird erfindungsgemäß dadurch gelöst, daß die Kopplung der parallelen Räder von Radpaaren und Radsätzen gezielt zur Spurführung eingesetzt wird. Dabei kommt es entscheidend darauf an, welche Information als Eingangsgröße zur Steuerung oder Regelung der Kopplung eingesetzt wird.

Als Steuer- oder Regelgröße eignen sich die Stellung von Fahrzeugen relativ zueinander, die Stellung eines Radsatzes oder Radpaares relativ zum Gleis und das Bewegungsverhalten von Radsätzen oder Radpaaren im Spurkanal des Geleises. Die zu steuernden oder zu regelnden Größen werden mit geeigneten mechanischen, elektrischen, hydraulischen, pneumatischen oder elektronischen Sensoren erfaßt und nach entsprechender Aufbereitung einem Regler oder einer Steuerung als Eingangsinformation zugeführt. Regler und Steuerungen werten die Eingangsgröße zusammen mit anderen Informationen über den Zustand und die Daten des zugehörigen Fahrzeugs aus und setzen sie in Stellbefehle für den Stellmotor des Fahrwerks um. Erst im Fahrwerk werden die zur Veränderung der Stellgröße notwendigen Kräfte und Momente erzeugt.

Der mit der Erfindung erzielbare Fortschritt besteht insbesondere darin, daß zur Verbesserung des Spurführungsverhaltens von Fahrzeugen im wesentlichen Informationen gewonnen und aufbereitet werden und nur im Fahrwerk geringe Energien zur Einstellung des gewünschten Fahrverhaltens einzusetzen sind. Stellkräfte bleiben ausschließlich auf das Fahrwerk beschränkt und beeinflussen den Fahrkomfort im Fahrzeugaufbau nicht.

Informationstechnisch unterstützte Fahrwerke können nicht nur sehr viel verschleißärmer und leiser - da sich selbsttätig auf aktuelle Situationen einstellend - betrieben, und können auch erheblich leichter gebaut werden können. Informationen sind heutzutage einfach leichter zu handhaben als Kräfte und Energien.

Die der Erfindung zugrundeliegenden Methoden und mögliche technische Ausführungen sind in den folgenden Beispielen schematisch dargestellt und kurz beschrieben.

Es zeigen

Fig. 1 die Prinzipskizze zweier gelenkig miteinander verbundenen Fahrzeuge mit je einem Einzelfahrwerk mit Darstellung des Gelenkwinkels β;

Fig. 2 das Strukturdiagramm einer Steuerkette zur Einstellung eines Einzelfahrwerks mit Winkelsensor zur Erfassung des Gelenkwinkels β;

Fig. 3 die Prinzipskizze eines unter einem Fahrzeug angeordneten Einzelfahrwerks mit Darstellung von Abständen zwischen Rädern und Schienenverlauf;

Fig. 4 das Strukturdiagramm einer Regelung zur Einstellung eines Einzelfahrwerks mit Abstandssensoren (δ-Sensoren);

Fig. 5 die Prinzipskizze eines unter einem Fahrzeug angeordneten Einzelfahrwerks mit Schallsensoren (σ-Sensoren);

Fig. 6 das Strukturdiagramm einer Regelung zur Einstellung eines Einzelfahrwerks mit Schallsensoren (σ-Sensoren;) ;

Fig. 7 die Prinzipskizze eines Einzelfahrwerks im Spurkanal eines Gleises mit Winkelsensoren (α-Sensoren)und

Fig. 8 das Strukturdiagramm zur elektronischen Auskopplung des Wellenlaufs eines Radsatzes mit Winkelsensoren (α-Sensoren.).

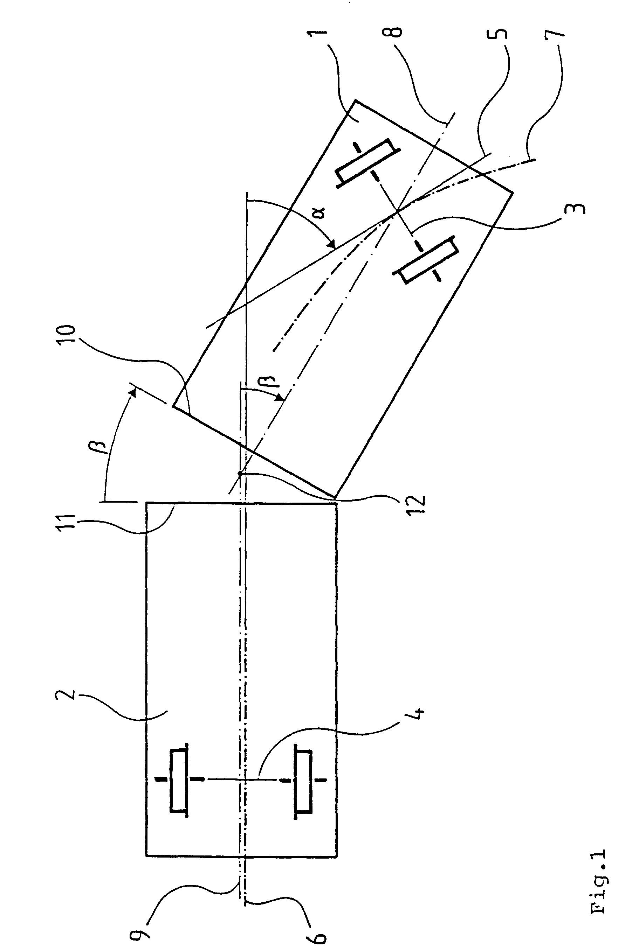

In Fig. 1 sind schematisch zwei gelenkig miteinander verbundene Fahrzeuge 1 und 2 mit ihren Einzelfahrwerken 3 und 4 dargestellt. Damit das Fahrwerk 3 der Gleisachse 7 bei Bogenfahrt ideal folgt, muß die Längsachse 5 des Fahrwerks 3 um den Winkel α gegen die Gleisachse 6 in der Geraden geschwenkt sein. Als Information für die Einstellung des Schwenkwinkels α dient der Gelenkwinkel β, der sich bei Bogenfahrt zwischen den Fahrzeuglängsachsen 8 und 9 bzw. den zugewandten Stirnwänden 10 und 11 der Fahrzeuge 1 und 2 abnehmen läßt. Der SchwenkWinkel α ist über den Bogenhalbmesser der Gleisachse 7 und den Abstand des Fahrwerks 3 vom Fahrzeuggelenk 12 mit dem Gelenkwinkel β verknüpft. Der Schwenk Winkel α wird durch unterschiedliche Drehzahlen der Räder des Fahrwerks 3 eingestellt.

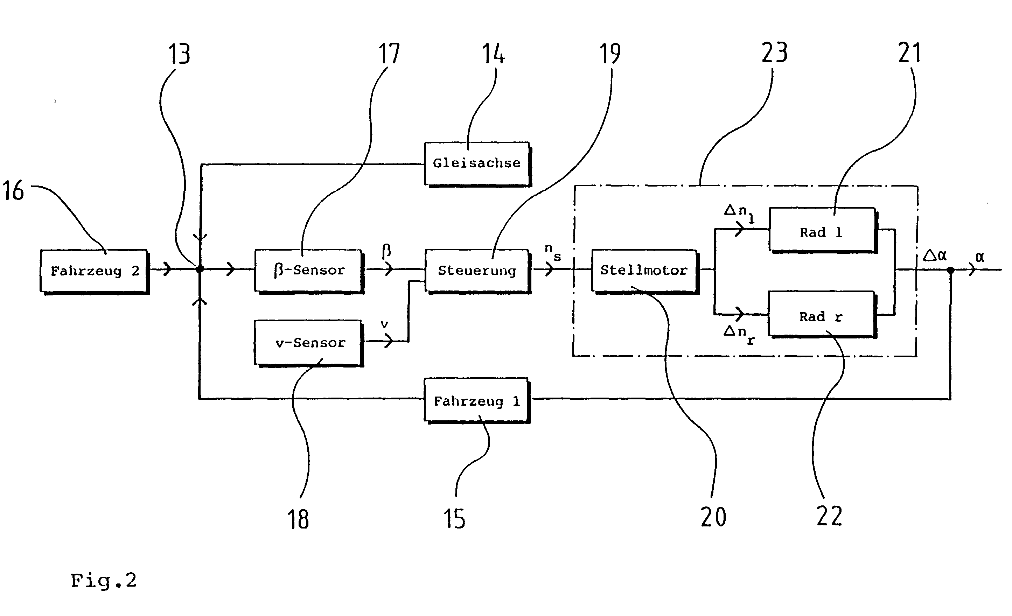

In Fig. 2 ist schematisch dargestellt, wie die Größen, die die Einstellung des Fahrwerks 1 beeinflussen, verknüpft werden. Auf den Abgriff 13 für den Gelenkwinkel β wirken die Lage 14 der Gleisachse, die Stellung 15 des Fahrzeugs 1 und die Stellung 16 des Fahrzeugs 2. Der Gelenkwinkel β wird mit einem Winkelsensor, nachfolgend als β-Sensor 17 bezeichnet, gemessen. Ein Geschwindigkeitssensor, nachfolgend als v-Sensor 18 bezeichnet, mißt die Fahrgeschwindigkeit nach Größe und Richtung. Die Informationen über die

Größe des Gelenkwinkels $\beta$ und die Fahrgeschwindigkeit v werden von der Steuerung 19 in eine Drehzahl $n_s$ des Stellmotors 20 umgewandelt.

Die Stellbewegung des Motors 20 wird in Überlagerungsdrehzahlen $\Delta n_l$ und $\Delta n_r$ zerlegt, die auf das linke Rad 21 und das rechte Rad 22 des Fahrwerks 1 übertragen werden. Infolge unterschiedlicher Drehzahlen der Räder 21 und 22 wird das Fahrwerk 1 um den Winkel $\Delta\alpha$ auf den Schwenk Winkel $\alpha$ geschwenkt. Der Winkel $\alpha$ beeinflußt rückwärts über die Stellung 15 des Fahrzeugs 1 wiederum den Gelenkwinkel $\beta$. Klar von der Informationsverknüpfung ist der Energieteil 23 abgehoben. Ausschließlich im Energieteil 23, der sich auf den Traktionsstrang des Fahrwerks beschränkt, werden Kräfte, Energien und Leistungen übertragen und gewandelt.

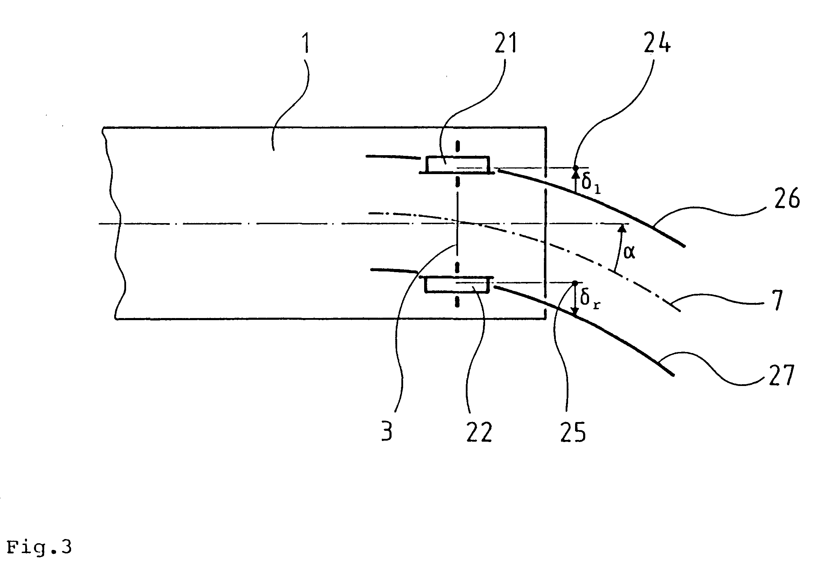

**Fig. 3** zeigt den vorderen Teil eines Einzelfahrzeugs 1 mit seinem Einzelfahrwerk 3. Jede Seite des Fahrwerks 3 ist mit Abstandssensoren, nachfolgend als $\delta$-Sensoren 24 und 25 bezeichnet, ausgestattet, welche die Abstände $\delta_l$ und $\delta_r$ zwischen den Radebenen der Räder 21 und 22 und den Fahrkanten 26 und 27 der Schienen messen. Die Sensoren 24 und 25 können vor, hinter oder vor und hinter den Rädern 21 und 22 des Fahrwerks 1 angeordnet sein.

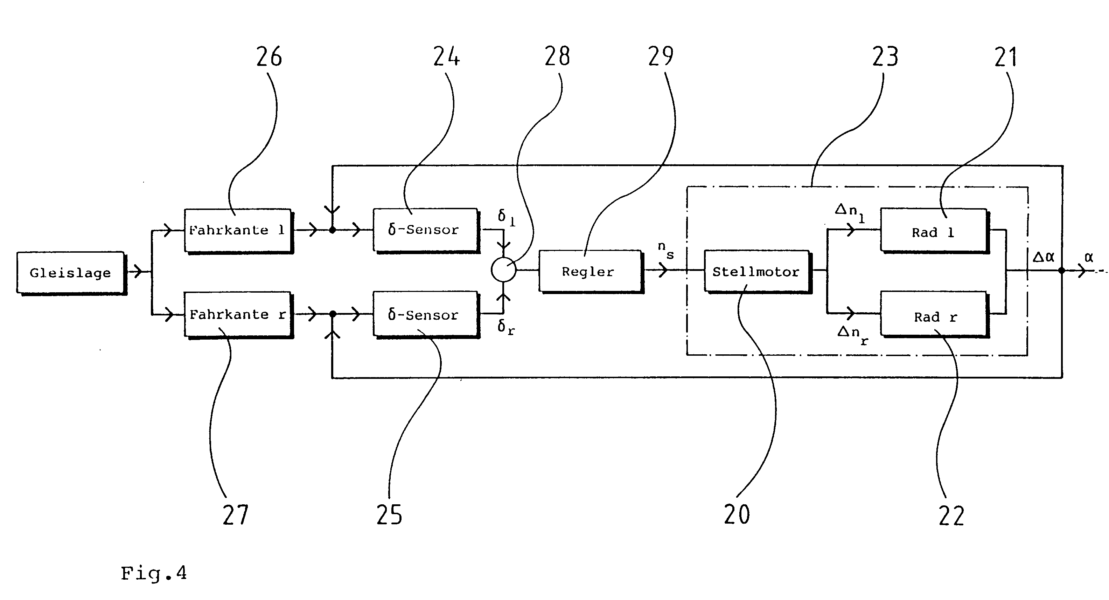

**Fig. 4** veranschaulicht, wie die Anzeigen der $\delta$-Sensoren 24 und 25 in eine Änderung $\Delta\alpha$ des Schwenkwinkels $\alpha$ umgewandelt werden. Der Vergleicher 28 stellt fest, ob sich die Abstände $\delta_l$ und $\delta_r$ unterscheiden. Abweichungen setzt der Regler 27 in Stelldrehzahlen $n_s$ für den Stellmotor 20 um. Die Drehung der Räder 21 und 22 wird mit den Drehzahlen $\Delta n_l$ und $\Delta n_r$ überlagert, was zu einer Änderung $\Delta\alpha$ des Schwenkwinkels $\alpha$ führt. Der Schwenkwinkel $\alpha$ seinerseits beeinflußt rückwärts zusammen mit der Lage der Fahrkanten 26 und 27 die von den $\delta$-Sensoren 24 und 25 gemessenen Abständen $\delta_l$ und $\delta_r$.

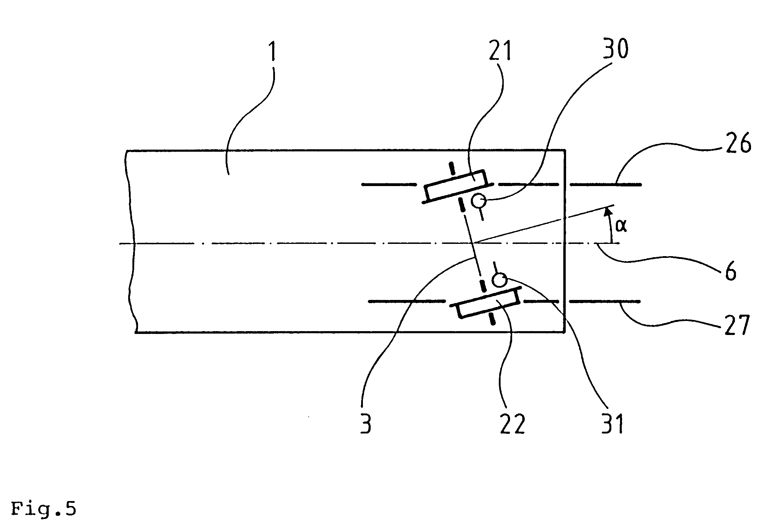

**Fig. 5** zeigt eine andere Methode zur Unterstützung des Spurführungsverhaltens. Dargestellt ist wiederum ein Fahrzeug mit seinem vorderen Fahrwerk 3. Mit Schallsensoren, nachfolgend als $\sigma$-Sensoren 30 und 31 bezeichnet, werden der Luftschall und der Körperschall im Bereich der Räder 21 und 22 gemessen. Nur bei gleichen kinematischen Verhältnissen an den Rädern 21 und 22 sind gleiche Schallemissionen zu erwarten. Gleiche kinematische Verhältnisse liegen aber nur bei Schwenkwinkel $\alpha=0$ vor. Von Null abweichende Schwenkwinkel $\alpha$ lassen sich am unterschiedlichen Schall erkennen.

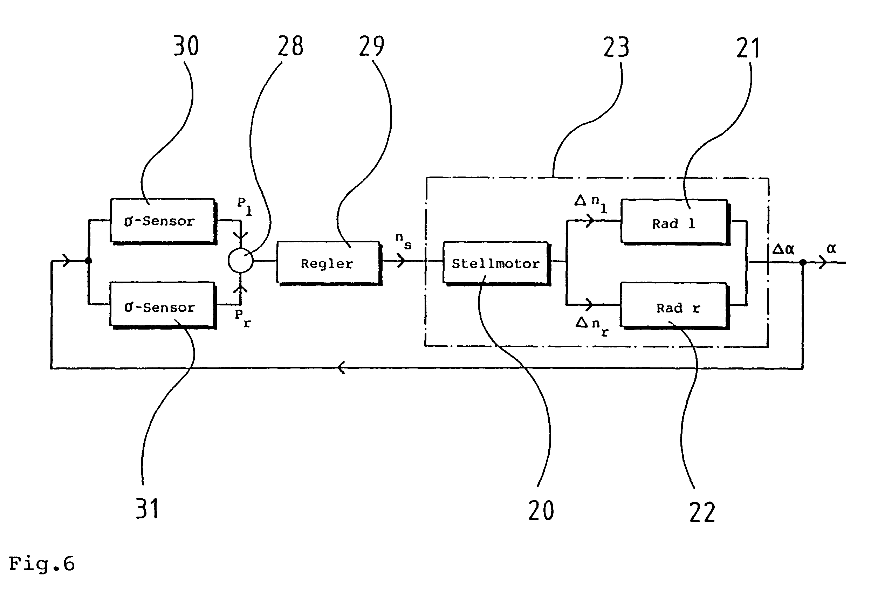

**Fig. 6** zeigt das Strukturdiagramm der Regelung nach der Methode gemäß Fig. 5, die das Fahrwerk 3 auf die Gleisachse 6 einstellt. Mit den $\sigma$-Sensoren 30 und 31 werden die Schallspektren $P_l$ und $P_r$ des linken Rades 21 und des rechtes Rades 22 aufgenommen. Der Vergleicher 28 stellt Unterschiede in den Schallspektren $P_l$ und $P_r$ fest. Differenzen setzt der Regler 29 wie bereits beschreiben über den Stellmotor 20 in unterschiedliche Drehzahlen der Räder 21 und 22 um und

damit in Änderungen $\Delta\alpha$ des Schwenkwinkels $\alpha$ um.

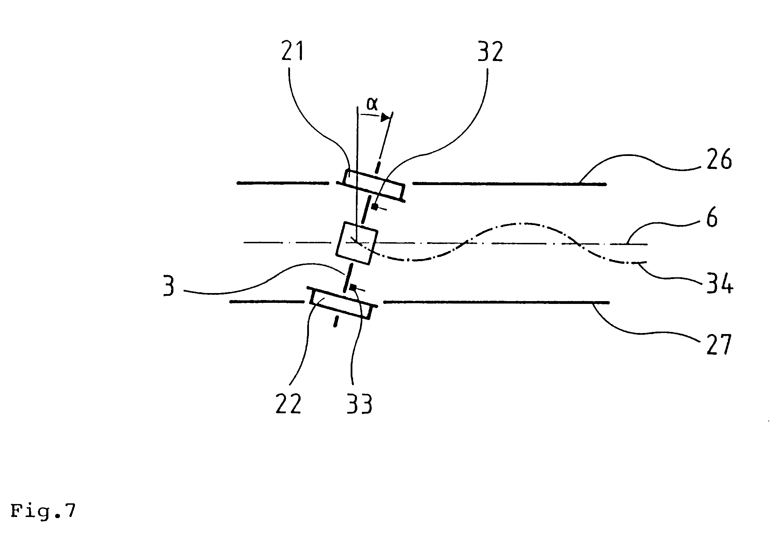

In **Fig. 7** ist ein einzelnes Fahrwerks 3 mit den Rädern 21 und 22 dargestellt, die fest mit der Welle zu einem Radsatz verbunden sind. Ohne zusätzliche, Maßnahmen folgt der Radsatz nicht der Gleisachse 6, sondern bewegt sich auf der wellenförmigen Bahnkurve 34. Dabei ändert der Radsatz seinen Schwenkwinkel $\alpha$ ständig. Die Änderung des Schwenkwinkels $\alpha$ wird mit Winkelsensoren, nachfolgend als $\alpha$-Sensoren 32 und 33 bezeichnet, gemessen. Die $\alpha$-Sensoren 32 und 33 können den Winkel $\alpha$, die Winkelgeschwindigkeit $\dot\alpha$ oder die Winkelbeschleunigung $\ddot\alpha$ erfassen.

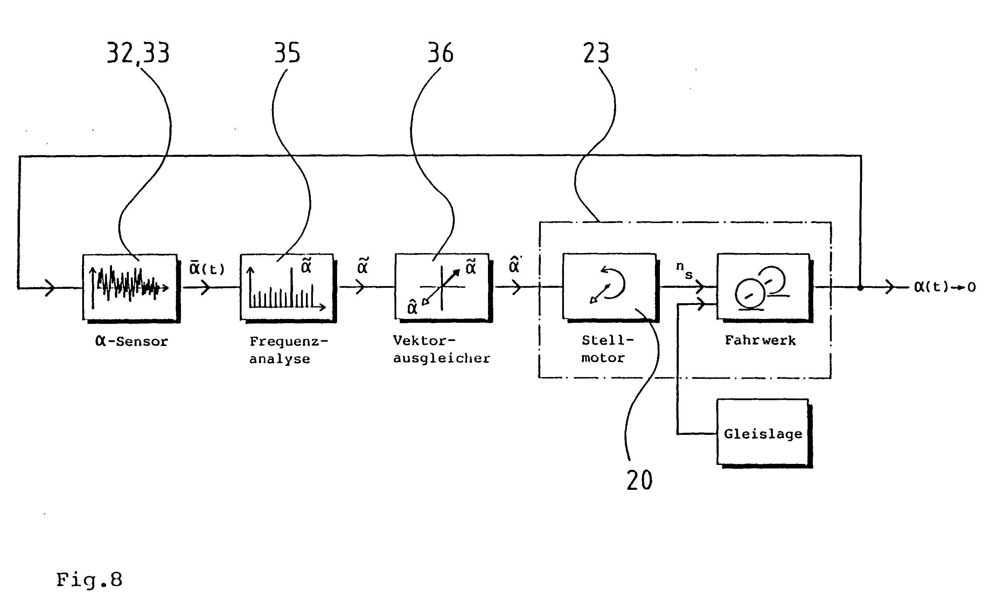

Die Schaltung in **Fig. 8** dient dazu, den Wellenlauf des Radsatzes zu erkennen und ihn durch geeignete Radbewegungen der Räder 21 und 22 zu kompensieren. Dazu werden die von den $\alpha$-Sensoren 32 und 33 gemessenen Zeitsignale $\alpha(t)$ gemittelt. Das gemittelte Zeitsignal $\bar\alpha(t)$ wird im Frequenzanalysator 35 in seine Frequenzanteile $\alpha(f)$ zerlegt. Wellenlauf wird als periodisches Einzelereignis an der singulären Amplitude identifiziert und als Wellenlaufvektor $\tilde\alpha(\omega,\gamma)$ mit Amplitude $\tilde\alpha$, Frequenz $\tilde\omega$ und Phasenwinkel $\tilde\gamma$ ausgegeben. Der Vektorausgleicher 36 dreht den Wellenlaufvektor $\tilde\alpha$ um 180° und führt den Ausgleichsvektor $\hat\alpha$ mit der Amplitude $\hat\alpha = \tilde\alpha$, der Frequenz $\hat\omega = \tilde\omega$ und der Phasenlage $\hat\gamma = \tilde\gamma + \pi$ als Stellsignal dem Stellmotor 20 zu. Der Stellmotor 20 koppelt den Wellenlauf aus der Radsatzbewegung aus und macht damit das Fahrwerk 3 "wellenlaufunfähig". Die anderen erwünschten kinematischen und dynamischen Eigenschaften von Radsätzen bleiben unangetastet. Es entsteht ein völlig neues Spurführungsprinzip.

In einer weiteren Ausgestaltung der Erfindung wird das Spektrum $\alpha(f)$ ständig ausgegeben und selbst wieder als Zeitfunktion $\alpha f(t)$ aufgefaßt. Aus dem Vergleich der zu verschiedenen Zeitpunkten aufgenommen Spektren wird ein Stellsignal gebildet, das dem Stellmotor 20 als Eingangssignal dient.

## Bezugszeichenliste

| 1 | Fahrzeug 1 |
|---|---|
| 2 | Fahrzeug 2 |
| 3 | Fahrwerk 3 |
| 4 | Fahrwerk 4 |
| 5 | Längsachse Fahrwerk 3 |
| 6 | Gleisachse Gerade |
| 7 | Gleisachse Bogen |
| 8 | Längsachse Fahrzeug 1 |
| 9 | Längsachse Fahrzeug 2 |
| 10 | Stirnwand Fahrzeug 1 |
| 11 | Stirnwand Fahrzeug 2 |
| 12 | Fahrzeuggelenk |
| 13 | Abgriff |
| 14 | Lage der Gleisachse |
| 15 | Stellung Fahrzeug 1 |

16 Stellung Fahrzeug 2
17 β-Sensor
18 v-Sensor
19 Steuerung
20 Stellmotor
21 linkes Rad. Fahrwerk 1
22 rechtes Rad, Fahrwerk 1
23 Energieteil
24 δ-Sensor links
25 δ-Sensor rechts
26 Fahrkante links
27 Fahrkante rechts
28 Vergleicher
29 Regler
30 σ -Sensor links
31 σ-Sensor rechts
32 α-Sensor links
33 α-Sensor rechts
34 Bahnkurve
35 Frequenzanalysator
36 Vektorausgleicher

α - Schwenkwinkel
β - Gelenkwinkel
δ - Rad/Schiene-Abstand
σ- Schallspektrum

## Patentansprüche

1. Verfahren zur Gewinnung und Aufbereitung von Daten zur Spurführung von Fahrwerken, **dadurch gekennzeichnet,** daß die Wendebewegung des Fahrwerks (3) als Winkel ($\alpha$)*,* Winkelgeschwindigkeit ($\dot{\alpha}$) oder Winkelbeschleunigung ($\ddot{\alpha}$) kraftfrei mittels Winkelsensoren (α-Sensoren 32, 33) abgetastet, die gemessene Größe oder gemessenen Größen in ihre Frequenzanteile zerlegt, aus den Frequenzspektren herausragende Bewegungen nach Amplitude, Frequenz und Phasenlage als störend erkannt, der oder die so identifizierten Vektoren nach einer Phasendrehung von 180° und Aufbereitung einer Steuerung oder Regelung als Information zur Veränderung des Einstellwinkels ($\alpha$) des Fahrwerks zugeleitet und durch die Steuerung oder Regelung die störenden Bewegungsanteile aus der Fahrwerksbewegung ausgeblendet werden.

2. Verfahren zur Gewinnung und Aufbereitung von Daten zur Spurführung von Fahrwerken, **dadurch gekennzeichnet,** daß die von den Rädern (21, 22) eines Fahrwerks (3) ausgehenden mittel- und hochfrequenten Schwingungen mittels Schallsensoren (σ-Sensoren 30, 31) als Körperschall und Luftschall gemessen und in ihre Spektren zerlegt werden und aus dem Vergleich der Spektren ein Signal abgeleitet wird, das nach Aufbereitung einer Steuerung oder Regelung (29) zur Veränderung des Einstellwinkels ($\alpha$) des Fahrwerks (3) als Information zugeleitet wird.

## Claims

1. Method for acquisition and processing of data for guidance of axles, characterised in that the turning movement of the axle (3) is sensed as an angle ($\alpha$), angular velocity ($\dot{\alpha}$) or angular acceleration ($\ddot{\alpha}$) free of force by means of angle sensors ($\alpha$ sensors 32, 33), the measured variable or measured variables are broken down into their frequency components, movements standing out from the frequency spectra in terms of amplitude, frequency and phase position are recognised as disturbing, the vector or vectors identified in this way, after a phase rotation of 180° and processing are fed to a control or adjusting unit as information for alteration of the set angle ($\alpha$) of the axle, and the disturbing movement components are eliminated from the axle movement by the control or adjusting unit.

2. Method for acquisition and processing of data for guidance of axles, characterised in that the medium-frequency and high-frequency oscillations emanating from the wheels (21, 22) of an axle (3) are measured as structure-borne sound and air-borne sound by means of sound sensors ($\sigma$ sensors 30, 31) and broken down into their spectra, and a signal is derived from the comparison of the spectra which, after processing, is fed as information to a control or adjusting unit (29) for alteration of the set angle ($\alpha$) of the axle (3).

## Revendications

1. Procédé pour recueillir et traiter des données pour le guidage de trains de roulement, **caractérisé** en ce que le mouvement tournant du train de roulement (3) est détecté sans force, à l'aide de détecteurs angulaires (détecteurs-$\alpha$ 32, 33), sous la forme d'un angle ($\alpha$), d'une vitesse angulaire ($\dot{\alpha}$) ou d'une accélération angulaire ($\ddot{\alpha}$), la ou les grandeurs mesurées sont décomposées en parts de fréquence, les mouvements dont l'amplitude, la fréquence et la position de phase dépassent des spectres de fréquences sont identifiés comme gênants, le ou les vecteurs ainsi identifiés sont transmis, après une rotation de phase de 180° et le traitement, à une commande ou une régulation, comme information pour la modification de l'angle de réglage ($\alpha$) du train de roulement, et les parts de mouvement gênantes sont éliminées du mouvement des trains de roulement par la commande ou la régulation.

**2.** Procédé pour recueillir et traiter des données pour le guidage de trains de roulement, **caractérisé** en ce que les vibrations à moyenne et haute fréquence provenant des roues (21, 22) d'un train de roulement (3) sont mesurées à l'aide de détecteurs acoustiques (détecteurs-σ 30, 31) sous la forme de bruits de structure et de bruits aériens et sont décomposées en spectres, et à partir de la comparaison des spectres est déduit un signal qui, après traitement, est transmis comme information à une commande ou une régulation (29), en vue de modifier l'angle de réglage (α) du train de roulement (3).

Fig.1

Fig.2

8

EP 0 785 123 B1

Fig.3

Fig. 4

Fig.5

Fig.6

Fig.7

EP 0 785 123 B1

Fig.8

32,33   35   36   23

$\bar{\alpha}(t)$   $\tilde{\alpha}$   $\hat{\alpha}$

α-Sensor   Frequenzanalyse   Vektorausgleicher   Stellmotor   Fahrwerk

$n_s$

Gleislage

20

$\alpha(t) \rightarrow 0$

14

EP 0 785 123 B1